(19) Europäisches Patentamt
European Patent Office
Office européen des brevets

(11) **EP 1 831 616 B1**

(12) **FASCICULE DE BREVET EUROPEEN**

(45) Date de publication et mention
de la délivrance du brevet:
**16.08.2017 Bulletin 2017/33**

(51) Int Cl.:
***F25B 17/08*** *(2006.01)* ***F25B 27/00*** *(2006.01)*

(21) Numéro de dépôt: **05848348.8**

(86) Numéro de dépôt international:
**PCT/FR2005/003119**

(22) Date de dépôt: **13.12.2005**

(87) Numéro de publication internationale:
**WO 2006/067302 (29.06.2006 Gazette 2006/26)**

(54) **PRODUCTION DE FROID PAR UN PROCÉDÉ THERMOCHIMIQUE, POUR LA CLIMATISATION D'UN BÂTIMENT.**

KÄLTEERZEUGUNG DURCH EIN THERMOCHEMISCHES VERFAHREN ZUR KLIMATISIERUNG EINES GEBÄUDES

PRODUCING COLD BY A THERMOCHEMICAL METHOD FOR AIR-CONDITIONING A BUILDING

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **20.12.2004 FR 0413569**

(43) Date de publication de la demande:
**12.09.2007 Bulletin 2007/37**

(73) Titulaires:
• **Centre National de la Recherche Scientifique 75016 Paris (FR)**
• **Spinner Brossard, Caroline 09000 Brassac (FR)**
• **Spinner Kohler, Anne Christel 11100 Narbonne (FR)**
• **Spinner, Camille 66100 Perpignan (FR)**
• **Spinner, Martin 66100 Perpignan (FR)**

(72) Inventeurs:
• **SPINNER, Bernard décédé (FR)**
• **STITOU, Driss F-66570 St Nazaire (FR)**
• **COUDERT, Jean-Pierre 66000 Perpignan (FR)**

(74) Mandataire: **Goulard, Sophie et al Ipsilon Le Centralis 63, avenue du Général Leclerc 92340 Bourg-la-Reine (FR)**

(56) Documents cités:
**EP-A- 0 674 142      DE-A1- 1 800 174
US-A- 5 174 367      US-A- 5 335 519
US-A- 5 507 158**

• **ALAM K C A ET AL: "A four-bed mass recovery adsorption refrigeration cycle driven by low temperature waste/renewable heat source" RENEWABLE ENERGY, PERGAMON PRESS, OXFORD, GB, vol. 29, no. 9, juillet 2004 (2004-07), pages 1461-1475, XP004500148 ISSN: 0960-1481**
• **PATENT ABSTRACTS OF JAPAN vol. 014, no. 097 (M-0940), 22 février 1990 (1990-02-22) -& JP 01 305273 A (SEIJIRO SUDA), 8 décembre 1989 (1989-12-08)**
• **HAMAMOTO Y ET AL: "Performance evaluation of a two-stage adsorption refrigeration cycle with different mass ratio" INTERNATIONAL JOURNAL OF REFRIGERATION, OXFORD, GB, vol. 28, no. 3, mai 2005 (2005-05), pages 344-352, XP004761111 ISSN: 0140-7007**
• **SAHA B B ET AL: "Waste heat driven dual-mode, multi-stage, multi-bed regenerative adsorption system" INTERNATIONAL JOURNAL OF REFRIGERATION, OXFORD, GB, vol. 26, no. 7, novembre 2003 (2003-11), pages 749-757, XP004452513 ISSN: 0140-7007**

- **SAHA B B ET AL: "Solar/waste heat driven two-stage adsorption chiller: the prototype" RENEWABLE ENERGY, PERGAMON PRESS, OXFORD, GB, vol. 23, no. 1, mai 2001 (2001-05), pages 93-101, XP004224185 ISSN: 0960-1481**
- **DUENAS C ET AL: "Dynamic study of the thermal behaviour of solar thermochemical refrigerator: barium chloride-ammonia for ice production" SOLAR ENERGY MATERIALS AND SOLAR CELLS, ELSEVIER SCIENCE PUBLISHERS, AMSTERDAM, NL, vol. 70, no. 3, 31 décembre 2001 (2001-12-31), pages 401-413, XP004305601 ISSN: 0927-0248**

**Description**

La présente invention concerne un dispositif de production de froid par un procédé thermochimique, pour la climatisation d'un immeuble.

Un système constitué par un dipôle thermochimique mettant en oeuvre deux phénomènes thermochimiques renversables est un moyen connu pour produire du froid. Le dipôle thermochimique comprend un réacteur BT, un réacteur HT et des moyens pour échanger un gaz entre BT et HT. Les deux réacteurs sont le siège de phénomènes thermochimiques renversables choisis tels que, à une pression donnée dans le dipôle, la température d'équilibre dans BT est inférieure à la température d'équilibre dans HT. Le phénomène renversable dans le réacteur HT met en jeu un sorbant S et un gaz G et peut être une adsorption renversable de G par S ou une réaction chimique renversable de S et de G, selon le schéma

"Sorbant S" + "G" $\leftrightarrows$ "sorbant S+G".

Le phénomène renversable dans le réacteur BT met en jeu le même gaz G. Il peut être un changement de phase liquide / gaz du gaz G ou une adsorption renversable de G par un sorbant $S^1$ ou une réaction chimique renversable de $S^1$ et de G, le sorbant $S^1$ étant différent de S. L'étape de production de froid du dispositif correspond à l'étape de synthèse dans HT

"Sorbant S" + "G" $\rightarrow$ "sorbant S+G".

L'étape de régénération correspond à l'étape de décomposition dans HT

"Sorbant S+G" $\rightarrow$ "sorbant S" + "G".

La production de froid à une température Tf dans un dipôle (BT,HT) à partir d'une source de chaleur à la température Tc et d'un puits thermique à la température To, implique que le phénomène thermochimique dans BT et le phénomène thermochimique dans HT sont tels que :

- au cours de l'étape de production de froid par le dipôle, la consommation exothermique de gaz dans HT a lieu à une température proche de et supérieure à To, qui créé dans le dipôle une pression telle que la température d'équilibre dans le réacteur BT est proche de et inférieure à Tf.
- au cours de l'étape de régénération du dipôle, la libération endothermique de gaz dans HT est effectuée par apport de chaleur à la température Tc, qui crée dans le dipôle une pression telle que la température à laquelle s'effectue la consommation exothermique de gaz dans BT est proche de et supérieure à To.

Le phénomène thermochimique dans un réacteur BT est généralement un changement de phase liquide/gaz de G. BT est alors un ensemble évaporateur/condenseur EC.

L'utilisation de dispositifs thermochimiques pour la climatisation de bâtiments est attrayante, dans la mesure où les dispositifs concernés sont silencieux et ne génèrent pas de vibrations. Généralement, ces dispositifs utilisent comme puits thermique le sous-sol, qui est de manière quasi-permanente à une température de 15°C dans les régions tempérées. En outre, la climatisation étant nécessaire principalement aux périodes de forte chaleur, il peut être envisagé d'utiliser l'énergie solaire qui est particulièrement abondante durant ces périodes. Cependant, la chaleur captée par les capteurs plans peu coûteux est à une température qui ne dépasse généralement pas 70°C. Des températures nettement supérieures ne peuvent être obtenues qu'avec des capteurs solaires de haute technologie et particulièrement coûteux, tel que des capteurs sous vide, ou des capteurs à concentration parabolique ou cylindro-parabolique. En outre, l'énergie solaire subit des variations en intensité, d'une part au cours de l'année, et d'autre part au cours d'une journée.

On connaît des phénomènes thermochimiques qui permettent de produire du froid à partir d'une source de chaleur à une température Tc de l'ordre de 70° , et un puits thermique à une température To de l'ordre de 15°C. Par exemple, on peut utiliser dans le réacteur BT du dipôle, un changement de phase L/G de l'ammoniac ($NH_3$), de la méthylamine ($NH_2CH_3$) ou de $H_2O$. Pour les réacteurs, on peut citer une sorption chimique renversable de $NH_3$ par $CaCl_2$, par $BaCl_2$, par $PbBr_2$, par $PbCl_2$, par $LiCl$, par $SnCl_2$, par $ZnSO_4$ ou par $NH_4Br$, ou de $NH_2CH_3$ par $CaCl_2$ ; ou une adsorption d'eau par de la zéolithe ou un silicagel ; ou l'adsorption de méthanol (MeOH) ou d'ammoniac dans du charbon actif ; ou l'absorption de $NH_3$ dans une solution liquide d'ammoniaque ($NH_3$, $H_2O$) ou de $H_2O$ par une solution saline de LiBr.

Le document US5174367 décrit un dispositif de production de froid à partir d'un gaz de travail qui est de l'hydrogène. Le dispositif met en oeuvre une réaction chimique entre un solide et l'hydrogène en lieu et place d'une condensation/évaporation.

La publication ALAM K C ET AL « a four-bed mass recovery adsorption réfrigération cycle driven by low temperature waste/renewable heat source", RENEWABLE ENERGY, PERGAMON PRESS, OXFORD, GB,vol 29, no9, juillet 2004 (2004-07), pages 1461-1475, XP004500148 ISSN: 0960-1481, décrit un dispositif de production de froid piloté par une source de chaleur à basse température.

Le but de la présente invention est fournir un dispositif pour la climatisation d'un bâtiment, ledit dispositif étant constitué par plusieurs dipôles thermochimiques fonctionnant entre une source de chaleur à une température Tc liée à l'énergie solaire et un puits de chaleur à une température To de l'ordre de 15°C, notamment à l'aide de phénomènes thermochimiques connus utilisant comme gaz de travail l'ammoniac, la méthylamine ou l'eau.

La présente invention a pour objet un dispositif et un procédé thermochimiques pour la climatisation d'un bâtiment à partir de source d'une chaleur intermittente dont la température maximale Th est de l'ordre de 70°C et d'un puits thermique à une température de l'ordre de 15°C.

Le dispositif selon l'invention comprend trois ou quatre dipôles thermochimiques comprenant chacun un ensemble évaporateur-condenseur EC et un réacteur R reliés par des moyens qui permettent la circulation d'un gaz G entre eux et des moyens qui permettent d'interrompre la circulation du gaz. Il est caractérisé en ce que :

- les réacteurs sont le siège de phénomènes renversables entre le gaz G et un liquide ou un solide, et les évaporateurs-condenseurs sont le siège d'un changement de phase liquide-gaz de G ;
- les réacteurs R sont munis de moyens pour échanger de la chaleur entre eux et de moyens qui permettent le contrôle de l'échange de chaleur ;
- les phénomènes thermochimiques dans les différents dipôles peuvent être identiques ou différents ;
- le dispositif comprend une source de chaleur à température variable Tc, dont la température maximale Th est de l'ordre de 70°C, et un puits thermique à une température To de l'ordre de 15°C.

Dans un tel dispositif, dans lequel l'ensemble EC de chaque dipôle est le siège d'un changement de phase liquide/ gaz du gaz de travail G, la température dans R est naturellement supérieure à la température dans EC, pour un dipôle donné.

Les phénomènes thermochimiques dans les différentes dipôles présentent de préférence des courbes d'équilibre proches pour limiter les pertes thermiques vers l'extérieur des réacteurs. On considère que deux courbes d'équilibre de deux phénomènes thermochimiques sont proches lorsque, à une pression d'équilibre donnée, les températures d'équilibre respectives diffèrent d'au plus 15°C. Il est particulièrement avantageux de choisir le même phénomène thermochimique dans tous les dipôles.

Les dipôles du dispositif selon l'invention seront désignés ci-après par Da (constitué par l'évaporateur-condenseur ECa et le réacteur Ra), Db (constitué par ECb et Rb), Dc (constitué par ECc et Rc), et éventuellement Dd (constitué par ECd et Rd).

Au cours d'un cycle journalier de 24 heures comprenant les phases successives M1, H1, H2, M2, B, les capteurs solaires fournissent de la chaleur disponible à une température Tc variable suivant les phases du cycle. Au cours des phases H1 et H2 de plein ensoleillement, la chaleur fournie se situe près de la valeur Th de l'ordre de 70°C. Durant la phase M1 qui précède ou la phase M2 qui suit le plein ensoleillement, la chaleur produite est à une température intermédiaire Tm comprise entre Th et To mais cependant utilisable comme source de chaleur. Au cours de la nuit ou en l'absence de soleil (phase B), la chaleur est à une température Tb proche de la température ambiante To, donc trop faible pour être utilisable comme source de chaleur.

Le procédé selon la présente invention est destiné à produire du froid par cycles de 24 heures qui comprennent chacun les phases successives M1, H1, H2, M2, B, à partir d'une source de chaleur dont la température est à une valeur Th de l'ordre de ou supérieure à 70°C au cours des phases H1 et H2, à une valeur intermédiaire Tm au cours des phases M1 et M2, et à une valeur Tb proche de la température ambiante au cours de la phase B. Il est caractérisé en ce qu'il consiste à faire fonctionner le dispositif selon l'invention, de manière à créer des sources de chaleur internes à une température supérieure à la température de la source externe, au cours des périodes où celle-ci est trop faible, notamment durant les phases M1 et M2.

Plus particulièrement, le procédé de production de froid selon l'invention consiste à faire fonctionner le dispositif selon l'invention dans les conditions suivantes :

a) on provoque la régénération de chaque dipôle par apport au réacteur R dudit dipôle d'une quantité de chaleur fournie par le capteur solaire, l'apport étant fait

- soit directement au réacteur R du dipôle à régénérer lorsque la chaleur est fournie par la source de chaleur à une température élevée (phases H1, H2), les réacteurs R de deux dipôles pouvant recevoir simultanément la chaleur à température élevée Th ;
- soit indirectement lorsque de la chaleur est fournie à une température intermédaire Tm (phases M1, M2), la chaleur étant alors fournie à l'évaporateur-condenseur EC d'un dipôle régénéré pour y provoquer la phase de synthèse exothermique dans le réacteur R correspondant, ladite synthèse dégageant une quantité de chaleur à une température supérieure à Tm et proche de Th, qui est transmise au réacteur R d'un dipôle à régénérer.

b) la chaleur est introduite dans le dispositif de telle sorte que :

- deux dipôles sont régénérés simultanément (directement ou indirectement) au cours des phases H1 et H2, pendant qu'un dipôle produit du froid
- un ou deux dipôle(s) est (sont) régénéré(s) indirectement pendant chaque phase M1 et M2, l'un des autres dipôles produisant éventuellement du froid ;
- éventuellement, un dipôle produit du froid pendant la phase B.

Un dipôle donné est régénéré totalement ou partiellement à la fin d'un cycle complet, suivant la quantité de chaleur disponible lors de l'étape de régénération et la quantité de froid requise lors de l'étape de production de froid d'un cycle complet.

Dans un premier mode de réalisation, le procédé de l'invention est mis en oeuvre dans un dispositif constitué par 3 dipôles Da, Db et Dc dans lesquels les phénomènes thermochimiques sont identiques, en vue de produire du froid pendant les phases H1 et H2 durant lesquelles la chaleur est disponible à la température la plus élevée Th, pendant la phase M2 durant laquelle la chaleur est disponible à une température intermédiaire Tm, le dispositif étant en régénération pendant la phase M1 et inactif en phase B.

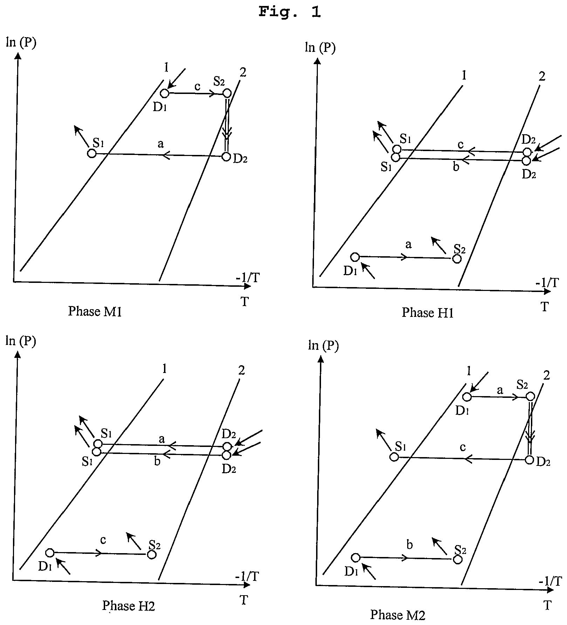

La figure 1 représente, sur un diagramme de Clapeyron, l'évolution des conditions de température et de pression dans le dispositif au cours de chacune des phases actives. Les courbes 2 correspondent à l'équilibre thermochimique dans chacun des réacteurs, et les courbes 1 correspondent à l'équilibre thermochimique dans chacun des évaporateurs-condenseurs. Les lettres a, b et c indiquent le dipôle concerné par l'évolution.

A la fin de la phase B, l'évaporateur-condenseur est isolé du réacteur dans chacun des dipôles, et les différents dipôles sont à l'état suivant :

Da à régénérer
Db à régénérer
Dc partiellement régénéré.

Au début de la phase M1, on ouvre la liaison gazeuse entre ECa et Ra d'une part, et entre ECc et Rc d'autre part, et on apporte de la chaleur à la température Tm à ECc du dipôle Dc (point D1). Cet apport de chaleur provoque l'évaporation du gaz G qui se transfère dans le réacteur Rc dans lequel se produit alors la phase de synthèse exothermique (point S2). La chaleur libérée par cette synthèse est transférée dans Ra où elle provoque la libération du gaz G (point D2). Le gaz libéré dans Ra est transféré dans ECa où il se condense en libérant de la chaleur (point S1). A la fin de la phase M1, les dipôles sont à l'état suivant :

Da partiellement régénéré
Db à régénérer
Dc à régénérer.

Au début de la phase H1, on ouvre la liaison gazeuse entre ECb et Rb. Au cours de la phase H1, on régénère les dipôles Db et Dc par apport direct de chaleur à la température Th dans Rb et Rc (points D2) Le gaz libéré dans Rb et Rc est transféré respectivement dans ECb et ECc où il se condense (points S1). Parallèlement, du froid est produit par le dipôle Da dans ECa par prélèvement de chaleur sur le milieu à refroidir (point D1). A la fin de la phase H1, les dipôles sont à l'état suivant :

Da à régénérer
Db partiellement régénéré
Dc totalement régénéré.

Durant la phase H2, on apporte de la chaleur à la température Th aux réacteurs Ra et Rb (points D2) pour continuer la régénération de Db et pour commencer la régénération de Da. Parallèlement, du froid se produit spontanément dans ECb (point D1). A la fin de la phase H2, les dipôles sont à l'état suivant :

Da    partiellement régénéré

Db    totalement régénéré

Dc    à régénérer

Durant la phase M2, on apporte de la chaleur à la température Tm à ECa (point D1) pour provoquer la synthèse exothermique dans Ra dont la chaleur est transmise à Rc pour régénérer le dipôle Dc. Parallèlement, du froid se produit spontanément dans ECb. A la fin de la phase M2, les dipôles sont à l'état suivant :

Da    à régénérer

Db    à régénérer

Dc    partiellement régénéré.

A la fin de la phase M2, on ferme les liaisons gazeuses entre l'évaporateur-condenseur et le réacteur d'un même dipôle et on laisse l'installation en l'état pendant la phase B, jusqu'au début de la phase M1 du cycle suivant.

Dans un deuxième mode de réalisation, le procédé est mis en oeuvre dans un dispositif qui comprend trois dipôles Da, Db et Dc identiques, en vue de produire du froid pendant toutes les phases d'un cycle de 24 heures.

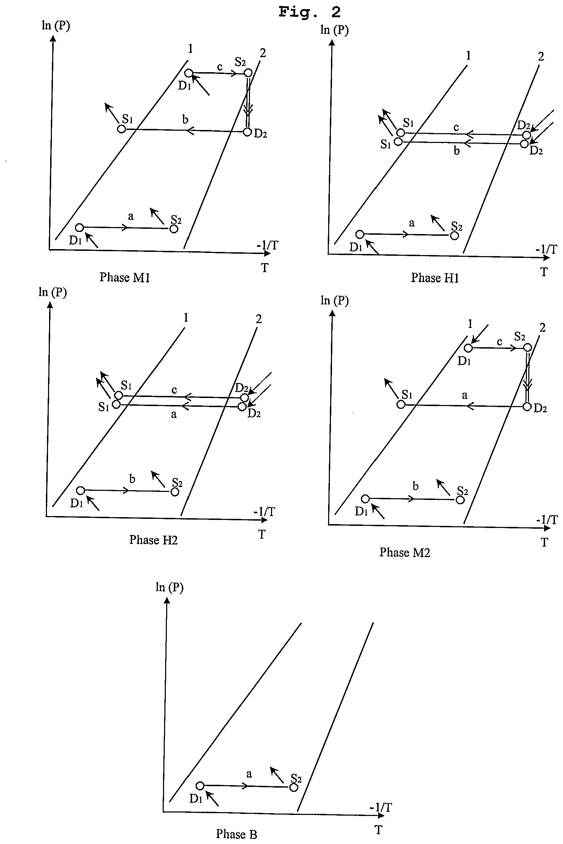

La figure 2 représente, sur un diagramme de Clapeyron, l'évolution des conditions de température et de pression dans le dispositif au cours de chacune des phases. Les courbes 2 correspondent à l'équilibre thermochimique dans chacun des réacteurs, et les courbes 1 correspondent à l'équilibre thermochimique dans chacun des évaporateurs-condenseurs. Les lettres a, b et c indiquent le dipôle concerné par l'évolution.

A la fin de la phase B, l'évaporateur-condenseur est isolé du réacteur dans chacun des dipôles, et les différents dipôles sont à l'état suivant :

Da    partiellement déchargé

Db    à régénérer

Dc    partiellement déchargé

Au début de la phase M1, on apporte de la chaleur à la température Tm à ECc (point D1/c) pour provoquer la synthèse exothermique dans Rc (point S2/c) dont la chaleur est transmise à Rb (point D2/b) pour régénérer le dipôle Db. Parallèlement, du froid se produit spontanément en ECa (point D1/a). A la fin de la phase M1, les dipôles sont à l'état suivant :

Da    partiellement déchargé

Db    partiellement régénéré

Dc    à régénérer.

Au cours de la phase H1, on régénère les dipôles Db et Dc par apport direct de chaleur à la température Th dans Rb et Rc (points D2/b et D2/c). Parallèlement, du froid continue de se produire en ECa (point D1/a). A la fin de la phase H1, les dipôles sont à l'état suivant :

Da    à régénérer

Db    totalement régénéré

Dc    partiellement régénéré.

Durant la phase H2, on apporte de la chaleur à la température Th aux enceintes Ra et Rc (points D2/a et D2/c) pour continuer la régénération de Dc et pour commencer la régénération de Da. Parallèlement, du froid se produit spontanément en ECb (point D1/b). A la fin de la phase H2, les dipôles sont à l'état suivant :

Da    partiellement régénéré

Db    partiellement déchargé

Dc    totalement régénéré.

Durant la phase M2, on apporte de la chaleur à la température Tm à ECc (point D1/c) pour provoquer la synthèse exothermique dans Rc (point S2/c) dont la chaleur est transférée en Ra pour initier la régénération du dipôle Da. Parallèlement, du froid se produit spontanément en ECb (point E2/b). A la fin de la phase M2, les dipôles sont à l'état suivant :

| | |
|---|---|
| Da | totalement régénéré |
| Db | à régénérer |
| Dc | partiellement déchargé. |

A la fin de la phase M2, on ferme les liaisons gazeuses entre ECb et Rb d'une part, et entre ECc et Rc d'autre part. Pendant la phase B, on maintient la liaison gazeuse dans le dipôle Da et il se produit du froid en ECa (point D1/a). A la fin de la phase M2, les dipôles sont à l'état suivant :

| | |
|---|---|
| Da | partiellement déchargé |
| Db | à régénérer |
| Dc | partiellement déchargé. |

Durant la phase B, le dispositif continue de produire du froid par le dipôle Da.

Dans un troisième mode de réalisation, le procédé est mis en oeuvre dans un dispositif qui comprend quatre dipôles Da, Db, Dc et Dd, en vue de produire du froid pendant les phases H1, H2, M2 et B, le dispositif étant en régénération pendant la phase M1. Les dipôles Da et Db sont couplés thermiquement. Les dipôles Dc et Dd sont couplés thermiquement.

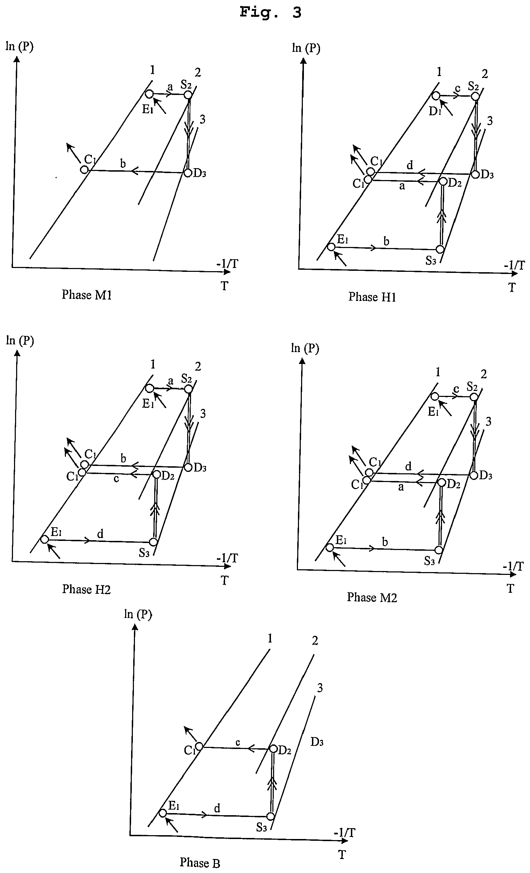

La figure 3 représente, sur un diagramme de Clapeyron, l'évolution des conditions de température et de pression dans le dispositif au cours de chacune des phases actives. Les courbes 1 correspondent à l'équilibre thermochimique dans chacun des évaporateurs-condenseurs, les courbes 2 correspondent à l'équilibre thermochimique dans chacun des réacteurs Ra et Rc, et les courbes C correspondent à l'équilibre thermochimique dans les réacteurs Rb et Rd. Les lettres a, b, c et d indiquent le dipôle concerné par l'évolution.

Les réacteurs Ra et Rc des dipôles Da et Dc sont le siège du même phénomène thermochimique, et les réacteurs Rb et Rd des dipôles Db et Dd sont le siège du même phénomène, différent de celui qui a lieu dans les dipôles Da et Dc. En outre, tous les phénomènes chimiques mettent en oeuvre le même gaz de travail G, de sorte que tous les évaporateurs-condenseurs sont le siège d'un changement de phase liquide-gaz du même gaz G. Ainsi, à une pression donnée régnant identiquement dans les 4 dipôles, les températures d'équilibre dans les différentes enceintes sont comme suit :

$$t(ECa) = t(ECb) = t(ECc) = t(ECd) < t(Ra) = t(Rc) < t(Rb) = t(Rd)$$

A la fin de la phase B, la liaison gazeuse entre EC et R de chaque dipôle est fermée et les différents dipôles sont à l'état suivant :

| | |
|---|---|
| Da | régénéré |
| Db | à régénérer |
| Dc | régénéré |
| Dd | à régénérer. |

Au cours de la phase M1, on ouvre la liaison gazeuse entre ECa et Ra d'une part, et entre ECb et Rb d'autre part, on apporte de la chaleur à la température Tm à ECa (point E1/a) du dipôle Da pour provoquer la synthèse exothermique dans Ra (point S2/a) dont la chaleur est transmise à Rb (point D3/b) pour régénérer le dipôle Db. A la fin de la phase M1, les dipôles sont à l'état suivant :

| | |
|---|---|
| Da | à régénérer |
| Db | régénéré |
| Dc | régénéré |
| Dd | à régénérer. |

Au début de la phase H1, on ouvre la liaison gazeuse entre ECa et Ra d'une part, et entre Ecd et Rd d'autre part. Au cours de la phase H1, on apporte de la chaleur à la température Tm à ECc du dipôle Dc (point D1/c) pour provoquer la synthèse exothermique dans Rc (point S2/c) dont la chaleur est transmise à Rd (point D3/D) pour régénérer le dipôle Dd. Parallèlement, du froid se produit spontanément en ECb (point E1/b), provoquant la synthèse exothermique dans Rb (point S3/b) dont la chaleur est transmise à Ra (point D2/a) pour régénérer le dipôle Da. A la fin de la phase H1, les dipôles sont à l'état suivant :

| | |
|---|---|
| Da | régénéré |
| Db | à régénérer |
| Dc | à régénérer |
| Dd | régénéré. |

Durant la phase H2, on apporte de la chaleur à la température Tm à ECa (point E1/a) du dipôle Da pour provoquer la synthèse exothermique dans Ra (point S2/a) dont la chaleur est transmise à Rb (point D3/b) pour régénérer le dipôle Db. Parallèlement, du froid se produit spontanément en ECd (point E1/d), provoquant la synthèse exothermique dans Rd (point S3/d) dont la chaleur est transmise à Rc (point D2/c) pour régénérer le dipôle Dc. A la fin de la phase H2, les dipôles sont à l'état suivant :

| | |
|---|---|
| Da | à régénérer |
| Db | régénéré |
| Dc | régénéré |
| Dd | à régénérer. |

Durant la phase M2, on apporte de la chaleur à la température Tm à ECc (point E1/c) du dipôle Dc pour provoquer la synthèse exothermique dans Rc (point S2/c) dont la chaleur est transmise à Rd (point D3/d) pour régénérer le dipôle Dd. Parallèlement, du froid se produit spontanément en ECb (point E1/b), provoquant la synthèse exothermique dans Rb (point S3/b) dont la chaleur est transmise à Ra (point D2/a) pour régénérer le dipôle Da. A la fin de la phase M2, les dipôles sont à l'état suivant :

| | |
|---|---|
| Da | régénéré |
| Db | à régénérer |
| Dc | à régénérer |
| Dd | régénéré. |

A la fin de la phase M2, on ferme les liaisons gazeuses entre ECa et Ra d'une part, et entre ECb et Rb d'autre part. Pendant la phase B, du froid se produit spontanément en Rd (point E1/d), provoquant la synthèse exothermique dans Rd (point S3/d) dont la chaleur est transmise à Rc (point D2/c) pour régénérer le dipôle Dc. A la fin de la phase B, les dipôles sont dans l'état suivant :

| | |
|---|---|
| Da | régénéré |
| Db | à régénérer |
| Dc | régénéré |
| Dd | à régénérer. |

La présente invention est illustrée à l'aide des exemples suivants.

**Exemple 1**

Cet exemple illustre une mise en oeuvre du 2ème mode de réalisation du procédé de l'invention.

L'évaporateur-condenseur de chacun des trois dipôles est le siège d'un changement de phase liquide/gaz de $NH_3$. Le réacteur de chacun des dipôles est le siège d'une réaction chimique renversable entre $NH_3$ et $BaCl_2$.

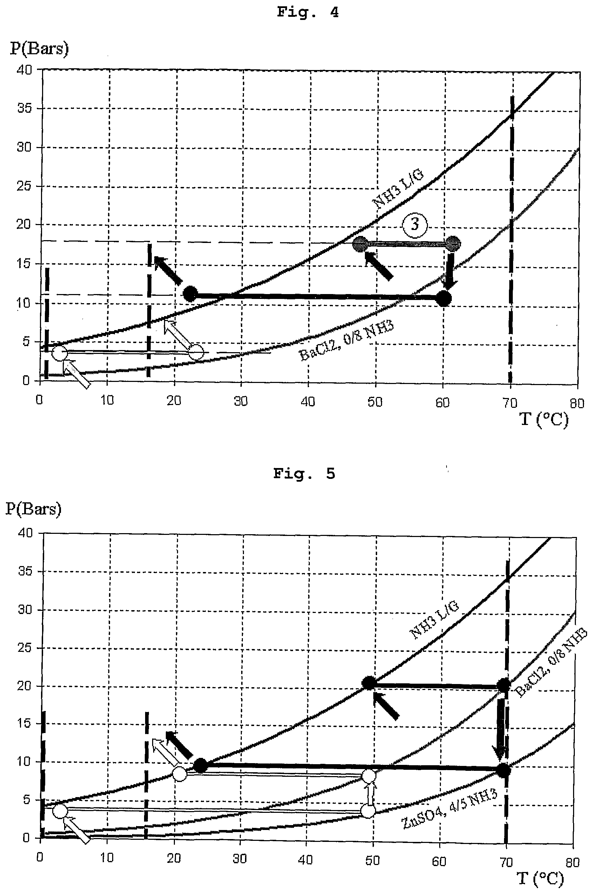

La figure 4 représente le diagramme de Clapeyron particulier pour les phase M1 et M2. Au cours de cette étape, du froid peut être produit à une température proche de 0°C à partir d'une source de chaleur inférieure à 50°C.

**Exemple 2**

Cet exemple illustre une mise en oeuvre du 3ème mode de réalisation du procédé de l'invention.

L'évaporateur-condenseur de chacun des quatre dipôles est le siège d'un changement de phase liquide/gaz de $NH_3$.

Le réacteur de chacun des dipôles Da et Dc est le siège d'une réaction chimique renversable entre $NH_3$ et $BaCl_2$. Le réacteur du dipôle Db et Dd est le sigèe d'une réaction chimique renversable entre $NH_3$ et $ZnSO_4$.

La figure 4 représente le diagramme de Clapeyron particulier pour les phases H1, H2 et M2. Au cours de cette étape, du froid peut être produit à une température proche de 0°C à partir d'une source de chaleur inférieure à 70°C.

**Revendications**

**1.** Dispositif pour la climatisation d'un bâtiment à partir de source d'une chaleur intermittente dont la température maximale Th est de 70°C et d'un puits thermique à une température To de 15°C, qui comprend trois ou quatre dipôles thermochimiques Da, Db, Dc et éventuellement Dd, comprenant chacun un ensemble évaporateur-condenseur EC et un réacteur R, désignés respectivement par ECa et Ra pour Da, ECb et Rb pour Db, ECc et Rc pour Dc, et ECd et Rd pour Dd, reliés par des moyens qui permettent la circulation d'un gaz G entre eux et des moyens qui permettent d'interrompre la circulation du gaz, **caractérisé en ce que** :

  - les réacteurs sont le siège de phénomènes renversables entre le gaz G et un liquide ou un solide, et les évaporateurs-condenseurs sont le siège d'un changement de phase liquide-gaz de G ;
  - les réacteurs R sont munis de moyens pour échanger de la chaleur entre eux et de moyens qui permettent le contrôle de l'échange de chaleur ;
  - les phénomènes thermochimiques dans les différents dipôles peuvent être identiques ou différents ;
  - le dispositif comprend une source de chaleur à température variable Tc, dont la température maximale Th est de 70°C, et un puits thermique à une température To de 15°C ;
  - les phénomènes thermochimiques dans les différentes dipôles présentent des courbes d'équilibre telles que, à une pression d'équilibre donnée, les températures d'équilibre respectives diffèrent d'au plus 15°C.

**2.** Dispositif selon la revendication 1, **caractérisé en ce que** le phénomène thermochimique est le même dans tous les dipôles.

**3.** Procédé pour la production de froid par cycles de 24 heures qui comprennent chacun les phases successives M1, H1, H2, M2, B, à partir d'une source de chaleur dont la température est à une valeur Th de l'ordre de ou supérieure à 70°C au cours des phases H1 et H2, à une valeur intermédiaire Tm au cours des phases M1 et M2, et à une valeur Tb proche de la température ambiante au cours de la phase B, **caractérisé en ce qu'**il consiste à faire fonctionner un dispositif selon l'une des revendications 1 ou 2, de manière à créer des sources de chaleur internes à une température supérieure à la température de la source externe, au cours des périodes où celle-ci est trop faible.

**4.** Procédé selon la revendication 3, **caractérisé en ce que** :

  a) on provoque la régénération de chaque dipôle par apport au réacteur R dudit dipôle d'une quantité de chaleur fournie par le capteur solaire, l'apport étant fait :

    - soit directement au réacteur R du dipôle à régénérer lorsque la chaleur est fournie par la source de chaleur à une température élevée (phases H1, H2), les réacteurs R de deux dipôles pouvant recevoir simultanément la chaleur à température élevée Th ;
    - soit indirectement lorsque de la chaleur est fournie à une température intermédaire Tm (phases M1, M2), la chaleur étant alors fournie à l'évaporateur-condenseur EC d'un dipôle régénéré pour y provoquer la phase de synthèse exothermique dans le réacteur R correspondant, ladite synthèse dégageant une quantité de chaleur à une température supérieure à Tm et proche de Th, qui est transmise au réacteur R d'un dipôle à régénérer.

  b) la chaleur est introduite dans le dispositif de telle sorte que :

    - deux dipôles sont régénérés simultanément (directement ou indirectement) au cours des phases H1 et H2, pendant qu'un dipôle produit du froid ;

- un ou deux dipôle (s) est (sont) régénéré (s) indirectement pendant chaque phase M1 et M2, l'un des autres dipôles produisant éventuellement du froid ;
- éventuellement, un dipôle produit du froid pendant la phase B.

5. Procédé selon la revendication 4, **caractérisé en ce qu'**il est mis en oeuvre dans un dispositif constitué par 3 dipôles Da, Db et Dc dans lesquels les phénomènes thermochimiques sont identiques, en vue de produire du froid pendant les phases H1 et H2 durant lesquelles la chaleur est disponible à la température la plus élevée Th, pendant la phase M2 durant laquelle la chaleur est disponible à une température intermédiaire Tm, le dispositif étant en régénération pendant la phase M1 et inactif en phase B.

6. Procédé selon la revendication 5, **caractérisé en ce que**, à partir d'un état correspondant à la fin de la phase B, dans lequel l'évaporateur-condenseur est isolé du réacteur dans chacun des dipôles, Da est à régénérer, Db est à régénérer et Dc est partiellement régénéré :

   - au début de la phase M1, on ouvre la liaison gazeuse entre ECa et Ra d'une part, et entre ECc et Rc d'autre part, et on apporte de la chaleur à la température Tm à ECc, ce qui provoque l'évaporation du gaz G qui se transfère dans Rc dans lequel se produit alors la phase de synthèse exothermique, la chaleur libérée par cette synthèse étant transférée dans Ra où elle provoque la libération du gaz G qui est transféré dans ECa où il se condense en libérant de la chaleur ;
   - au début de la phase H1, on ouvre la liaison gazeuse entre ECb et Rb et on régénère Db et Dc par apport direct de chaleur à la température Th dans Rb et Rc, le gaz libéré dans Rb et Rc étant transféré respectivement dans ECb et ECc où il se condense ; parallèlement, on produit du froid par Da dans ECa par prélèvement de chaleur sur le milieu à refroidir ;
   - durant la phase H2, on apporte de la chaleur à la température Th à Ra et Rb pour continuer la régénération de Db et pour commencer la régénération de Da ; parallèlement, du froid se produit spontanément dans ECb ;
   - durant la phase M2, on apporte de la chaleur à la température Tm à ECa pour provoquer la synthèse exothermique dans Ra dont la chaleur est transmise à Rc pour régénérer le dipôle Dc ;
   - à la fin de la phase M2, on ferme les liaisons gazeuses entre EC et R d'un même dipôle et on laisse l'installation en l'état pendant la phase B, jusqu'au début de la phase M1 du cycle suivant.

7. Procédé selon la revendication 4, **caractérisé en ce qu'**il est mis en oeuvre dans un dispositif qui comprend trois dipôles Da, Db et Dc qui sont le siège de phénomènes thermochimiques identiques, en vue de produire du froid pendant toutes les phases d'un cycle de 24 heures.

8. Procédé selon la revendication 7, **caractérisé en ce que**, à partir d'un étant correspondant à la fin de la phase B, dans lequel l'évaporateur-condenseur est isolé du réacteur dans chacun des dipôles, Da est à l'état partiellement déchargé, Db est à régénérer, et Dc est partiellement déchargé :

   - au début de la phase M1, on apporte de la chaleur à la température Tm à ECc pour provoquer la synthèse exothermique dans Rc dont la chaleur est transmise à Rb pour régénérer le dipôle Db, et parallèlement, du froid se produit spontanément en ECa ;
   - au cours de la phase H1, on régénère les dipôles Db et Dc par apport direct de chaleur à la température Th dans Rb et Rc et parallèlement, du froid continue de se produire en ECa ;
   - durant la phase H2, on apporte de la chaleur à la température Th à Ra et Rc pour continuer la régénération de Dc et pour commencer la régénération de Da, et parallèlement, du froid se produit spontanément en ECb ;
   - durant la phase M2, on apporte de la chaleur à la température Tm à ECc pour provoquer la synthèse exothermique dans Rc dont la chaleur est transférée en Ra pour initier la régénération de Da et, parallèlement, du froid se produit spontanément en ECb ;
   - à la fin de la phase M2, on ferme les liaisons gazeuses entre ECb et Rb d'une part, et entre ECc et Rc d'autre part, et pendant la phase B, on maintient la liaison gazeuse dans Da et il se produit du froid en ECa.

9. Procédé selon la revendication 4, **caractérisé en ce qu'**il est mis en oeuvre dans un dispositif qui comprend quatre dipôles Da, Db, Dc et Dd, en vue de produire du froid pendant les phases H1, H2, M2 et B ; le dispositif est en régénération pendant la phase M1 ; Da et Db sont couplés thermiquement et Dc et Dd sont couplés thermiquement ; les réacteurs Ra et Rc sont le siège du même phénomène thermochimique, et les réacteurs Rb et Rd sont le siège du même phénomène, différent de celui qui a lieu dans les réacteurs Ra et Rc ; tous les phénomènes chimiques mettent en oeuvre le même gaz de travail G, de sorte que tous les évaporateurs-condenseurs sont le siège d'un changement de phase liquide-gaz du même gaz G.

**10.** Procédé selon la revendication 9, **caractérisé en ce que**, à partir d'un état correspondant à la fin de la phase B, dans lequel la liaison gazeuse entre les deux enceintes de chaque dipôle est fermée, Da est régénéré, Db est à régénérer, Dc est régénéré et Dd est à régénérer :

- au cours de la phase M1, ou ouvre la liaison gazeuse entre ECa et Ra d'une part, et entre ECb et Rb d'autre part, on apporte de la chaleur à la température Tm à ECa pour provoquer la synthèse exothermique dans Ra dont la chaleur est transmise à Rb pour régénérer le dipôle Db ;
- au début de la phase H1, on ouvre la liaison gazeuse entre ECa et Ra d'une part, et entre Ecd et Rd d'autre part ; on apporte de la chaleur à la température Tm à ECc pour provoquer la synthèse exothermique dans Rc dont la chaleur est transmise à Rd pour régénérer le dipôle Dd et, parallèlement, du froid se produit spontanément en ECb provoquant la synthèse exothermique dans Rb dont la chaleur est transmise à Ra pour régénérer Da ;
- durant la phase H2, on apporte de la chaleur à la température Tm à ECa pour provoquer la synthèse exothermique dans Ra dont la chaleur est transmise à Rb pour régénérer Db et, parallèlement, du froid se produit spontanément en ECd en provoquant la synthèse exothermique dans Rd dont la chaleur est transmise à Rc pour régénérer Dc ;
- durant la phase M2, on apporte de la chaleur à la température Tm à ECc de Dc pour provoquer la synthèse exothermique dans Rc dont la chaleur est transmise à Rd pour régénérer Dd et, parallèlement, du froid se produit spontanément en ECb, provoquant la synthèse exothermique dans Rb dont la chaleur est transmise à Ra pour régénérer Da ;
- à la fin de la phase M2, on ferme les liaisons gazeuses entre ECa et Ra d'une part, et entre ECb et Rb d'autre part et, pendant la phase B subséquente, du froid se produit spontanément en Rd, provoquant la synthèse exothermique dans Rd dont la chaleur est transmise à Rc pour régénérer Dc.

**Patentansprüche**

**1.** Vorrichtung für die Klimatisierung eines Gebäudes ab einer intermittierenden Wärmequelle mit maximaler Temperatur Th von 70 °C und einer Wärmesenke mit einer Temperatur To von 15 °C, die drei oder vier thermochemische Dipole Da, Db, Dc und eventuell Dd umfasst, umfassend jeweils eine Verdampfer-Kondensator-Einheit EC und eine Reaktor R, bezeichnet jeweils mit ECa und Ra für Da, ECb und Rb für Db, ECc und Rc für Dc und ECd und Rd für Dd, verbunden durch Mittel, die die Zirkulation eines Gases G zwischen ihnen erlauben, und Mittel, die die Unterbrechung der Zirkulation des Gases erlauben, **dadurch gekennzeichnet, dass**:

- die Reaktoren der Sitz von reversiblen Phänomenen zwischen dem Gas G und einer Flüssigkeit oder einem Feststoff sind, und die Verdampfer-Kondensatoren der Sitz eines Flüssigkeit-Gas-Phasenwechsels von G sind,
- die Reaktoren R mit Mitteln ausgestattet sind, um untereinander Wärme auszutauschen, und mit Mitteln, die die Kontrolle des Wärmeaustauschs erlauben,
- die thermochemischen Phänomene in den verschiedenen Dipolen identisch oder unterschiedlich sein können,
- die Vorrichtung eine Wärmequelle mit variabler Temperatur Tc umfasst, deren maximale Temperatur Th 70 °C beträgt, und eine Wärmesenke mit einer Temperatur To von 15 °C,
- die thermochemischen Phänomene in den verschiedenen Dipolen Gleichgewichtskurven aufweisen, die derart sind, dass bei einem bestimmten Gleichgewichtsdruck die Gleichgewichtstemperaturen höchstes um 15 °C differieren.

**2.** Vorrichtung nach Anspruch 1, **dadurch gekennzeichnet, dass** das thermochemische Phänomen in allen Dipolen dasselbe ist.

**3.** Verfahren für die Erzeugung von Kälte in 24-Stunden-Zyklen, die jeweils die aufeinanderfolgenden Phasen M1, H1, H2, M2, B umfassen, ab einer Wärmequelle, deren Temperatur auf einem Wert Th von zirka oder über 70 °C während der Phasen H1 und H2, auf einem Zwischenwert Tm während der Phasen M1 und M2 und auf einem Wert Tb nahe der Raumtemperatur während der Phase B ist, **dadurch gekennzeichnet, dass** es darin besteht, eine Vorrichtung nach einem der Ansprüche 1 oder 2 derart zu betreiben, dass interne Wärmequellen mit einer Temperatur über der Temperatur der externen Quelle während der Perioden geschaffen werden, in denen diese zu schwach ist.

**4.** Verfahren nach Anspruch 3 , **dadurch gekennzeichnet, dass**:

a) die Regeneration jedes Dipols durch Einbringen in den Reaktor R des Dipols einer vom Sonnensensor bereitgestellten Wärmemenge bewirkt, wobei das Einbringen erfolgt:

- entweder direkt in den Reaktor R des zu regenerierenden Dipols, wenn die Wärme von der Wärmequelle in einer hohen Temperatur (Phasen H1, H2) bereitgestellt wird, wobei die Reaktoren R von zwei Dipolen die Wärme in hoher Temperatur Th gleichzeitig empfangen können,

- oder indirekt, wenn die Wärme in einer Zwischentemperatur Tm (Phasen M1, M2) bereitgestellt wird, wobei die Wärme dann dem Verdampfer-Konsendator EC eines regenerierten Dipols bereitgestellt wird, um dort die exotherme Synthesephase im entsprechenden Reaktor R zu bewirken, wobei die Synthese eine Wärmemenge in einer Temperatur über Tm und nahe Th freisetzt, die an den Reaktor R eines zu regenerierenden Dipols übertragen wird,

b) die Wärme in die Vorrichtung derart eingeleitet wird, dass:

- zwei Dipole während der Phasen H1 und H2 gleichzeitig regeneriert werden (direkt oder indirekt), währenddessen ein Dipol Kälte erzeugt,

- einer oder zwei Dipol(e) während jeder Phase M1 und M2 indirekt regeneriert wird (werden), wobei einer der anderen Dipolen eventuell Kälte erzeugt,

- eventuell ein Dipol während der Phase B Kälte erzeugt.

5.  Verfahren nach Anspruch 4, **dadurch gekennzeichnet, dass** es in einer Vorrichtung durchgeführt wird, die von drei Dipolen Da, Db und Dc gebildet ist, in welchen die thermochemischen Phänomene identisch sind, zwecks der Erzeugung von Kälte während der Phasen H1 und H2, in welchen die Wärme in der höchsten Temperatur Th verfügbar ist, während der Phase M2, in welcher die Wärme in einer Zwischentemperatur Tm verfügbar ist, wobei die Vorrichtung während der Phase M1 in Regeneration und in Phase B inaktiv ist.

6.  Verfahren nach Anspruch 5, **dadurch gekennzeichnet, dass** ab einem Zustand, der dem am Ende von Phase B entspricht, in welcher der Verdampfer-Kondensator vom Reaktor in jedem der Dipole isoliert ist, Da zu regenerieren ist, Db zu regenerieren ist und Dc teilweise regeneriert ist:

- zu Beginn der Phase M1 die Gasverbindung zwischen ECa und Ra zum einen und zwischen ECc und Rc zum anderen geöffnet wird, und ECc Wärme in Temperatur Tm zugeführt wird, was die Verdampfung des Gases G bewirkt, das in Rc gelangt, wo dann die exotherme Synthesephase erfolgt, wobei die durch diese Synthese freigesetzte Wärme in Ra weitergeleitet wird, wo sie die Freisetzung des Gases G bewirkt, das in ECa weitergeleitet wird, wo es kondensiert und dabei Wärme freisetzt,

- zu Beginn der Phase H1 die Gasverbindung zwischen ECb und Rb geöffnet wird und Db und Dc durch direktes Einbringen von Wärme in Temperatur Th in Rb und Rc regeneriert wird, wobei das in Rb und Rc freigesetzte Gas jeweils in ECb und ECc weitergeleitet wird, wo es kondensiert; parallel wird durch Da in ECa durch Entnahme von Wärme aus dem zu kühlenden Milieu Kälte erzeugt,

- während der Phase H2 Wärme in Temperatur Th in Ra und Rb eingebracht wird, um die Regeneration von Db fortzusetzen und um die Regeneration von Da zu beginnen; parallel wird in ECb spontan Kälte erzeugt,

- während der Phase M2 Wärme in Temperatur Tm in ECa eingebracht wird, um die exotherme Synthese in Ra zu bewirken, deren Wärme an Rc übertragen wird, um den Dipol Dc zu regenerieren,

- am Ende der Phase M2 die gasförmigen Verbindungen zwischen EC und R eines selben Dipols geschlossen werden und die Anlage bis zu Beginn der Phase M1 des nächsten Zyklus im Zustand während der Phase B gelassen.

7.  Verfahren nach Anspruch 4, **dadurch gekennzeichnet, dass** es in einer Vorrichtung durchgeführt wird, die drei Dipole Da, Db und Dc umfasst, die der Sitz identischer thermochemischer Phänomene sind, zwecks der Erzeugung von Kälte während aller Phasen eines 24-Stunden-Zyklus.

8.  Verfahren nach Anspruch 7, **dadurch gekennzeichnet, dass** ab einem entsprechenden Zustand am Ende von Phase B, in welchem der Verdampfer-Kondensator vom Reaktor in jedem der Dipole isoliert ist, Da in teilweise entladenem Zustand ist, Db zu regenerieren ist und Dc teilweise entladen ist:

- zu Beginn der Phase M1 Wärme in Temperatur Tm in ECc eingebracht wird, um die exotherme Synthese in Rc zu bewirken, deren Wärme an Rb übertragen wird, um den Dipol Db zu regenerieren, und parallel in ECa spontan Kälte erzeugt wird,

- während der Phase H1 die Dipole Db und Dc durch direktes Einbringen von Wärme in Temperatur Th in Rb und Rc regeneriert werden und parallel in ECa weiterhin Kälte erzeugt wird,

- während der Phase H2 wird Wärme in Temperatur Th in Ra und Rc eingebracht, um die Regeneration von Dc fortzusetzen und um die Regeneration von Da zu beginnen, und parallel in ECb spontan Kälte erzeugt wird,
- während der Phase M2 Wärme in Temperatur Tm in ECc eingebracht wird, um die exotherme Synthese in Rc zu bewirken, deren Wärme an Ra übertragen wird, um die Regeneration von Da zu initiieren, und parallel in ECb spontan Kälte erzeugt wird,
- am Ende der Phase M2 die gasförmigen Verbindungen zwischen ECb und Rb zum einen und zwischen ECc und Rc zum anderen geschlossen werden, und während der Phase B die Gasverbindung in Da aufrechterhalten und in ECa Kälte erzeugt wird.

9. Verfahren nach Anspruch 4, **dadurch gekennzeichnet, dass** es in einer Vorrichtung durchgeführt wird, die vier Dipole Da, Db, Dc und Dd zwecks Erzeugung von Kälte während der Phasen H1, H2, M2 und B umfasst, wobei die Vorrichtung während der Phase M1 in Regeneration ist; Da und Db thermisch gekoppelt sind und Dc und Dd thermisch gekoppelt sind; die Reaktoren Ra und Rc der Sitz desselben thermochemischen Phänomens sind und die Reaktoren Rb und Rd der Sitz desselben Phänomens sind, das von dem, das in den Reaktoren Ra und Rc stattfindet, unterschiedlich ist; wobei alle chemischen Phänomene dasselbe Arbeitsgas G verwenden, so dass alle Verdampfer-Kondensatoren der Sitz einer Phasenänderung Flüssigkeit-Gas desselben Gases G sind.

10. Verfahren nach Anspruch 9, **dadurch gekennzeichnet, dass** ab einem Zustand, der dem Ende der Phase B entspricht, in welcher die Gasverbindung zwischen den zwei Behältern jedes Dipols geschlossen ist, Da regeneriert wird, Db zu regenerieren ist, Dc regeneriert ist und Dd zu regenerieren ist:

- während der Phase M1 die Gasverbindung zwischen ECa und Ra zum einen und zwischen ECb und Rb zum anderen geöffnet wird, Wärme in Temperatur Tm in ECa eingebracht wird, um die exotherme Synthese in Ra zu bewirken, deren Wärme an Rb übertragen wird, um den Dipol Db zu regenerieren,
- zu Beginn der Phase H1 die Gasverbindung zwischen ECa und Ra zum einen und zwischen Ecd und Rd zum anderen geöffnet wird; Wärme in Temperatur Tm in ECc eingebracht wird, um die exotherme Synthese in Rc zu bewirken, deren Wärme an Rd übertragen wird, um den Dipol Dd zu regenerieren, und parallel in ECb spontan Kälte erzeugt wird, was die exotherme Synthese in Rb bewirkt, deren Wärme an Ra übertragen wird, um Da zu regenerieren,
- während der Phase H2 Wärme in Temperatur Tm in ECa eingebracht wird, um die exotherme Synthese in Ra zu bewirken, deren Wärme an Rb übertragen wird, um Db zu regenerieren, und parallel wird in ECd spontan Kälte erzeugt, was die exotherme Synthese in Rd bewirkt, deren Wärme an Rc übertragen wird, um Dc zu regenerieren,
- während der Phase M2 wird Wärme in Temperatur Tm in ECc von Dc eingebracht, um die exotherme Synthese in Rc zu bewirken, deren Wärme an Rd übertragen wird, um Dd zu regenerieren, und parallel in ECb spontan Kälte erzeugt wird, was die exotherme Synthese in Rb bewirkt, deren Wärme an Ra übertragen wird, um Da zu regenerieren
- am Ende der Phase M2 die gasförmigen Verbindungen zwischen ECa und Ra zum einen und zwischen ECb und Rb zum anderen geschlossen werden und während der darauffolgenden Phase B in Rd spontan Kälte erzeugt wird, was die exotherme Synthese in Rd bewirkt, deren Wärme an Rc übertragen wird, um Dc zu regenerieren.

## Claims

1. A device for air-conditioning a building from a source of intermittent heat for which the maximum temperature Th is 70°C and from a heat sink at a temperature of 15°C, which comprises three or four thermochemical dipoles Da, Db, Dc and optionally Dd, each comprising an evaporator-condenser assembly EC and a reactor R respectively designated by ECa and Ra for Da, ECb and Rb for Db, ECc and Rc for Dc and ECd and Rd for Dd, connected through means which allow circulation of a gas G between them and means which allow interruption of the circulation of the gas, **characterized in that**:

- the reactors are the center of reversible phenomena between the gas G and a liquid or a solid, and the evaporators-condensers are the center of a liquid-gas phase transition of G;
- the rectors R are provided with means for exchanging heat with each other and means which allow control of the heat exchange;
- the thermochemical phenomena in the different dipoles may be identical or different;
- the device comprises a heat source at a variable temperature Tc, the maximum temperature Th of which is 70°C, and a heat sink at a temperature To of 15°C;

- the thermochemical phenomena in the different dipoles have equilibrium curves such that, at a given equilibrium pressure, the respective equilibrium temperature differ by at most 15°C.

2. The device according to claim 1, **characterized in that** the thermochemical phenomenon is the same in all the dipoles.

3. A method for refrigeration by cycles of 24 hours which each comprise successive phases M1, H1, H2, M2, B from a heat source, the temperature of which is at a value Th of the order of or greater than 70°C during phases H1 and H2, at an intermediate value Tm during the phases M1 and M2, and at a value Tb close to the room temperature during phase B, **characterized in that** it consists of operating a device according to one of claims 1 or 2, so as to generate internal heat sources at a temperature greater than the temperature of the external source, during periods when the latter is too low.

4. The method according to claim 3, **characterized in that**:

   a) the regeneration of each dipole is caused by providing the reactor R of said dipole with an amount of heat provided by the solar sensor, the provision being made:

   - either directly to the reactor of the dipole to be regenerated when the heat is provided by the heat source at a high temperature (phases H1, H2), the reactors R of two dipoles may simultaneously receive the heat at a high temperature Th;
   - or indirectly when the heat is provided at an intermediate temperature Tm (phases M1, M2), the heat then being provided to the evaporator-condenser EC of a regenerated dipole for causing therein the exothermic synthesis phase in the corresponding reactor R, said synthesis releasing an amount of heat at a temperature greater than Tm and close to Th, which is transmitted to the reactor R of a dipole to be regenerated.

   b) the heat is introduced into the device in such a way:

   - two dipoles are simultaneously regenerated (either directly or indirectly) during the phases H1 and H2, during which a dipole produces cold;
   - one or two dipoles is (are) regenerated indirectly during each phase M1 and M2, one of the other dipoles optionally producing cold;
   - optionally, a dipole produces cold during phase B.

5. The method according to claim 4, **characterized in that** it is applied in a device formed with 3 dipoles Da, Db and Dc wherein the thermochemical phenomena are identical, with view to producing cold during the phases H1 and H2 during which the heat is available at the highest temperature Th, during the phase M2 during which the heat is available at an intermediate temperature Tm, the device being regenerated during the phase M1 and inactive in phase B.

6. The method according to claim 5, **characterized in that**, from a state corresponding to the end of the phase B, wherein the evaporator-condenser is isolated from the reactor in each of the dipoles, Da is to be regenerated, Db is to be regenerated and Dc is partly regenerated:

   - at the beginning of the phase M1, the gas connection between ECa and Ra is opened on the one hand, and between ECc and Rc on the other hand, and heat is provided at the temperature Tm to ECc, which causes evaporation of the gas G which is transferred into Rc wherein the exothermic synthesis phase then occurs, the heat released by this synthesis being transferred into Ra where it causes the release of the gas G which is transferred into ECa or it is condensed by releasing heat;
   - at the beginning of the phase H1, the gas connection between ECb and Rb is opened and Db and Dc are regenerated by direct provision of heat at the temperature Th in Rb and Rc, the gas released in Rb and Rc being respectively transferred into ECb and ECc where it is condensed; in parallel, cold is produced by Da in ECa by picking up heat on the medium to be cooled;
   - during the phase H2, heat is provided at the temperature Th to Ra and Rb for continuing the regeneration of Db and for beginning the regeneration of Da; in parallel, cold is produced spontaneously in ECb;
   - during the phase M2, heat is provided at the temperature Tm to ECa for causing the exothermic synthesis in Ra, the heat of which is transmitted to Rc for regenerating the dipole Dc;
   - at the end of the phase M2, the gas connections between EC and R of a same dipole are closed and the facility is left in the state during phase B, until the beginning of the phase M1 of the next cycle.

7. The method according to claim 4, **characterized in that** it is applied in a device which comprises three dipoles Da, Db and Dc which are the center of identical thermochemical phenomena, with view to producing cold during all the phases of a 24 hour cycle.

8. The method according to claim 7, **characterized in that** from a state corresponding to the beginning of the phase B, wherein the evaporator-condenser is isolated from the reactor in each of the dipoles, Da is in the partly discharge state, Db is to be regenerated, and Dc is partly discharged:

- at the beginning of the phase M1, heat is provided at the temperature Tm to ECc for causing the exothermic synthesis in Rc, the heat of which is transmitted to Rb for regenerating the dipole Db, and in parallel, cold is spontaneously produced in ECa;
- during phase H1, the dipoles Db and Dc are regenerated by direct provision of heat at the temperature Th in Rb and Rc and in parallel, cold continues to be produced in ECa;
- during phase H2, heat is provided at the temperature Th to Ra and Rc for continuing the regeneration of Dc and for beginning the regeneration of Da, and in parallel cold is produced spontaneously in ECb;
- during the phase M2, heat is provided at the temperature Tm to ECc for causing the exothermic synthesis in Rc, the heat of which is transferred into Ra for initiating the regeneration of Da and, in parallel, cold is spontaneously produced in ECb;
- at the end of the phase M2, the gas connections between ECb and Rb on the one hand and between ECc and Rc on the other hand are closed, and during the phase B, the gas connection is maintained in Da and cold is produced in ECa.

9. The method according to claim 4, **characterized in that** it is applied in a device which comprises four dipoles Da, Db, Dc and Dd, with view to producing cold during the phases H1, H2, M2 and B; the device is being regenerated during phase M1; Da and Db are thermally coupled and Dc and Dd are thermally coupled; the reactors Ra and Rc are the center of the same thermochemical phenomenon, and the reactors Rb and Rd are the center of the same phenomenon, different from the one which took place in the reactors Ra and Rc; all the chemical phenomena apply the same working gas G, so that all the evaporators-condensers are the center of a liquid-gas phase transition of the same gas G.

10. The method according to claim 9, **characterized in that**, from a state corresponding to the end of the phase B, wherein the gas connection between both enclosures of each dipole is closed, Da is regenerated, Db is to be regenerated, Dc is regenerated and Dd is to be regenerated:

- during the phase M1, the gas connection between ECa and Ra on the one hand and between ECb and Rb on the other hand is opened, heat is provided at the temperature Tm to ECa for causing the exothermic synthesis in Ra the heat of which is transmitted to Rb for regenerating the dipole Db;
- at the beginning of the phase H1, the gas connection between ECa and Ra on the one hand and between ECd and Rd on the other hand is opened; heat is provided at the temperature Tm to ECc for causing the exothermic synthesis in Rc, the heat of which is transmitted to Rd for regenerating the dipole Dd and, in parallel, cold is spontaneously produced in ECb causing the exothermic synthesis in Rb, the heat of which is transmitted to Ra for regenerating Da;
- during the phase H2, heat is provided at the temperature Tm to ECa for causing the exothermic synthesis in Ra, the heat of which is transmitted to Rb for regenerating Db and, in parallel, cold is produced spontaneously in ECd by causing the exothermic synthesis in Rd, the heat of which is transmitted to Rc for regenerating Dc;
- during the phase M2, heat is provided at the temperature Tm to ECc of Dc in order to cause the exothermic synthesis in Rc, the heat of which is transmitted to Rd for regenerating Dd and, in parallel, cold is spontaneously produced in ECb, causing the exothermic synthesis in Rb, the heat of which is transmitted to Ra for regenerating Da;
- at the end of the phase M2, the gas connections between ECa and Ra on the one hand, and between ECb and Rb on the other hand are closed and, during the subsequent phase B, cold is spontaneously produced in Rd, causing the exothermic synthesis in Rd, the heat of which is transmitted to Rc for regenerating Dc.

Fig. 1

Phase M1

Phase H1

Phase H2

Phase M2

## Fig. 2

Phase M1

Phase H1

Phase H2

Phase M2

Phase B

Fig. 3

Phase M1

Phase H1

Phase H2

Phase M2

Phase B

EP 1 831 616 B1

Fig. 4

Fig. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5174367 A

**Littérature non-brevet citée dans la description**

- a four-bed mass recovery adsorption réfrigération cycle driven by low temperature waste/renewable heat source. **ALAM K C et al.** RENEWABLE ENERGY. PERGAMON PRESS, Juillet 2004, vol. 29, 1461-1475